# EUROPEAN PATENT SPECIFICATION

(11) **EP 2 738 093 B1**
(45) Date of publication and mention of the grant of the patent: **02.09.2015**
(21) Application number: 12194995.2
(22) Date of filing: 30.11.2012
(51) Int. Cl.: B64C 39/02, B64D 1/02

(54) **Method of landing of a surveillance unmanned aerial vehicle and and a surveillance unmanned aerial vehicle**
Verfahren zum Landen eines unbemannten Überwachungsflugzeugs und unbemanntes Überwachungsflugzeug
Procédé d'atterrissage d'un véhicule aérien de surveillance sans pilote et véhicule aérien de surveillance sans pilote

(43) Date of publication of application: 04.06.2014
(73) Proprietor: WB Electronics Spolka Akcyjna, 05-850 Ozarow Mazowiecki (PL)
(72) Inventor: Szuminski, Wojciech, 44-100 Gliwice (PL); Jurecki, Ryszard, 44-100 Gliwice (PL); Krupa, Grzegorz, 44-121 Gliwice (PL); Bartosiewicz, Adam, 02-385 Warszawa (PL); Wojciechowski, Piotr, 01-772 Warszawa (PL)
(74) Representative: BRANDPAT Patent and Trademark Attorneys Chlebicka Czyz Galazkiewicz Ziolkowski Professional Partnership

(56) References cited:
- WO-A1-2006/059324
- US-A- 6 056 237
- US-A1- 2003 066 932
- US-A1- 2009 224 094

## Description

The subject of this invention is a method of landing of a surveillance unmanned aerial vehicle and a surveillance unmanned aerial vehicle. The invention is applied in an aerial observational vehicle propelled by an electric engine and containing in particular power supply batteries, surveillance head control systems, transmitting and receiving systems, a flight control system, and a container comprising a surveillance head with a down-looking lens placed in a recess at the bottom part of the fuselage, and by which the pilotless aircraft is lightened at the final stage of flight just before landing. Polish patent specification P.342068 describes a method of increasing the safety of the aircraft emergency landing consisting in that at the final stage of flight, before landing, when the chamber situated at the bottom part of fuselage has been opened, the baggage container with baggage is removed outside and/or the fuel tank is removed together with fuel by means of parachutes, and then a pneumatic bag placed at the bottom part of the baggage container is filled with pressurized air.

American patent specification US 6338457 describes a parachute system of air objects recovery which enables safe landing of such objects in a chosen target location. The parachute system of regaining contains a cargo, a parachute or a paraglide, a system of servomechanisms, and an electronic control system. The parachute is of rectangular shape and is connected by shroud lines with the servomechanisms system built in the cargo and co-functioning with the electronic control system. The cargo may consist of landing air objects such as space vessels, air shooting targets and unmanned aerial vehicles for observation. The task of the system of servomechanisms and the electronic control system is to control the descend flight trajectory in such a manner that the cargo attached to the parachute lands safely. The servomechanisms system adjusts the length of each shroud line controlling the direction and fall velocity of the attached cargo.

The drawback of this known method is a complicated structure of the system which controls the servomechanism system which in turn adjusts the length of parachute shroud lines, and the impact of strong winds which may make it impossible to maintain correct parachute steering parameters.

The document US 2003/0066932 A1 describes an unmanned aerial vehicle equipped for surveillance purposes, that employs a parachute system for landing.

Polish patent specification P.342068 describes a device increasing safety of the aircraft emergency landing, equipped with a balancing chamber cover to which internally there is detachably attached a fuel tank containing at least one parachute and/or baggage container equipped with at least one parachute, whilst the endings of movable segments of pneumatic servomotors are attached to the cover.

American patent specification US 2009/030887A1 describes a device which increases safety of landing of an unmanned aerial vehicle (UAV), said device having a movable protecting cover mounted on the top or at the bottom part of the fuselage and a chamber fitted with at least one parachute attached by shroud lines to the UAV fuselage near its gravity center. Shortly before landing, the movable segments of pneumatic servomotors reject the cover of the parachute chamber, and then pneumatic bags at the bottom part of the fuselage are filled with pressurized air.

The drawback of these known devices is the complicated structure of the system which controls the pneumatic servomotors system, and the necessity to use large pneumatic bags to protect the cargo and fuselage at the time of landing.

The object of the invention is to eliminate the drawbacks of the known methods, wherein a container located in the recess at the bottom part of the fuselage can be detached, and then said container is moved outside the fuselage, and with the help of parachute the container descends into a desired place and the lightened aircraft is caused to land in some other place. Preferably, after the container is detached from the fuselage, the parachute fixed near the surveillance head forces the falling container to turn around its horizontal axis by 180 degrees causing the lens of the surveillance head to tilt up. Preferably, after the container is detached from the fuselage, the electrical engine which drives the propeller turns off, and the propeller collapses along the axis of the fuselage, and then the lightened aircraft is guided to slide landing by means of the flight control system powered by auxiliary batteries.

The subject of the invention is also a surveillance unmanned aerial vehicle **characterized in that** said vehicle is equipped with an electronically controlled lock situated in a recess of the fuselage, which detachably fixes a container equipped with at least one parachute, wherein the parachute is placed at the bottom part of the container on the side of the surveillance head.

Preferably, the electronically operated lock co-functions with a lock mandrel mounted on the container.

Preferably, the container contains main power supply batteries and systems which control the surveillance head.

Thanks to the invention, an expensive photographing or film equipment can be safely brought back to the ground, as well as the heaviest element of UAV equipment, that is the main power supply batteries, thus the lightened vehicle can be brought to slide landing with the use of the flight control system powered by auxiliary batteries.

The invention provides also a simple and cheap air vehicle capable of reliable detachment from the fuselage valuable photo or film equipment, and the heaviest element of UAV equipment, which is the main power supply batteries.

The subject of the invention is illustrated in its embodiments on the drawing, wherein Fig. 1 shows a safe surveillance aircraft with an attached container, in a side view; Fig. 2 depicts the plane shortly after detachment of the container, in a side view; Fig. 3 represents the air vehicle after detachment of the container, in a side view; Fig. 4 shows the container rotated around its horizontal axis by 180 degrees, descending from a parachute, in a side view.

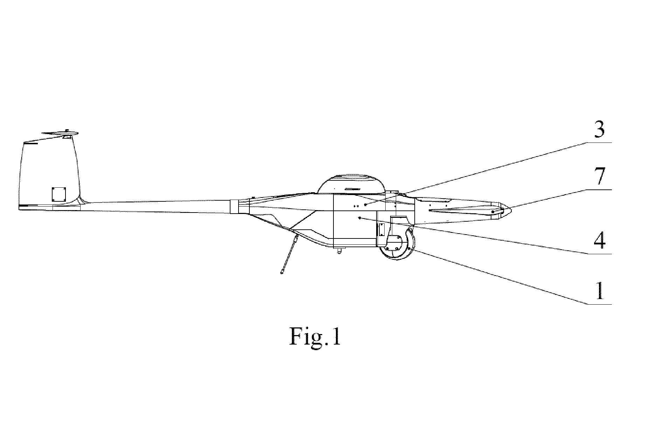

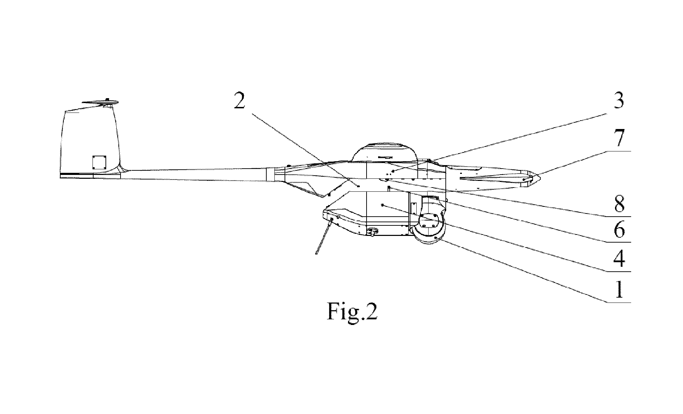

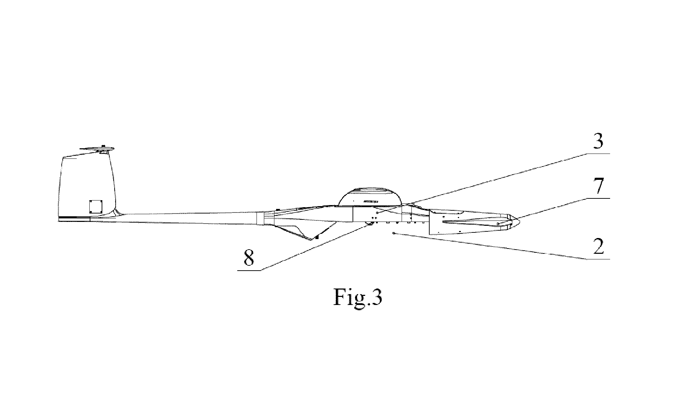

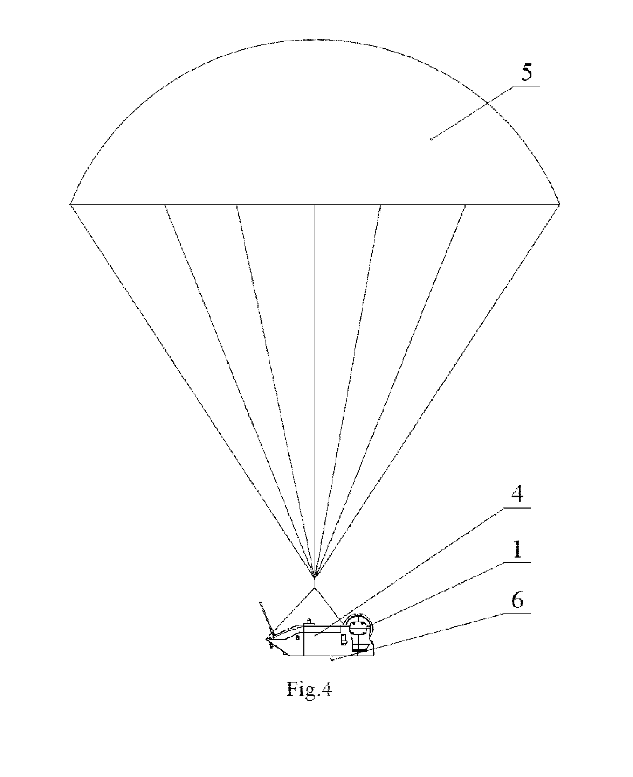

The method of enhancing the safety of landing of surveillance UAV is explained in Figures 1-4 of the drawing. In a recess 2 of the fuselage 3 of an unmanned aerial vehicle a container 4 with main power supply batteries, a surveillance head, and a parachute 5 are fastened by means of the mandrel 6, and the unmanned vehicle is then sent on an observational mission, wherein the flight parameters and the flight route are monitored with the help of controlling and measuring apparatus. When the mission is over, the aircraft is guided to a landing place. In the vicinity of the landing place, a radio signal is emitted to the electronically controlled mandrel lock 8 situated within the recess 2 of the fuselage 3, said lock releasing the mandrel 6 situated in the upper part of the container 4. This moment is shown in Fig. 2. As visualized in Fig. 3, after detachment of the container 4 from the fuselage 3, the electric engine driving the propeller 7 is turned off, and then the propeller 7 collapses along the fuselage 3 axis, and with the use of flight control system powered by auxiliary batteries, the lightened aircraft is brought down to slide landing. Fig. 4 shows the container 4 detached from the fuselage 3 container, which influenced by the parachute 5 fixed near the surveillance head, slowly descends to the ground rotating around its horizontal axis by 180 degrees, causing thereby the observational lens 9 to turn up, and the mandrel 6 to move down towards the approaching earth surface.

As depicted in Figures 1-4, the unmanned aerial vehicle according to the invention, has a recess 2 in the fuselage 3 with an electrically operated mandrel lock 8. The electronically operated mandrel lock 8 is placed in the recess 2, with detachably attached container 4 with the surveillance head 1 containing the lens 9, the parachute 5, and the main power supply batteries not shown in the drawing, by means of the mandrel 6. The container 4 may also comprise exchangeable modules as equipment required to carry out a given surveillance or patrolling mission.

### LIST OF REFERENCES

1 - surveillance head
2 - recess in the fuselage
3 - fuselage of the aircraft
4 - container
5 - parachute
6 - lock mandrel
7 - propeller
8 - electronically controlled mandrel lock
9 - lens

## Claims

1. A method of landing of an unmanned aerial vehicle driven by an electric engine, containing the main power supply batteries, surveillance head control systems, transmitting and receiving systems, a flight control system, and a container equipped with a surveillance head with a looking down lens placed in a recess at the bottom part of the fuselage, wherein the unmanned air vehicle is lightened at the last stage of flight shortly before landing, **characterized in that** the container (4) is detached from the recess (2) situated at the bottom part of the fuselage (3), and then the container (4) is moved outside the fuselage (3) and descended by means of a parachute (5) onto a requested place, and the lightened vehicle lands in another location.

2. The method according to claim 1, **characterized in that** when the container (4) is detached from the fuselage (3), the parachute (5) fixed near the surveillance head (1) forces the falling container (4) to rotate around its horizontal axis by 180 degrees causing the lens (9) of the surveillance head (1) to turn up.

3. The method according to claim 1 or 2, **characterized in that** when the container (4) is detached from the fuselage (3), an electric engine driving the propeller (7) is turned off, and after this the propeller (7) collapses along the axis of the fuselage (3), and the lightened vehicle is brought down to slide landing with the use of the flight control system powered by auxiliary batteries.

4. An unmanned aerial vehicle driven by an electric engine, containing a surveillance head control system, transmitting and receiving systems, a battery, and a container equipped with a surveillance head with a looking down lens placed in a recess at the bottom part of the fuselage, **characterized in that** in a recess (2) of the fuselage (3) an electronically controlled lock (8) is mounted, whereby the lock fixes in a detachable manner a container (4) furnished with at least one parachute (5) placed in the lower part of the container (4), on the side of the surveillance head (1).

5. The unmanned aerial vehicle according to claim 4, **characterized in that** the electronically controlled lock (8) co-functions with a lock mandrel (6) mounted on the container (4).

6. The unmanned aerial vehicle according to claim 4 or 5, **characterized in that** the container (4) comprises the main power supply batteries and the control systems of the surveillance head (1).

## Patentansprüche

1. Landungsverfahren für unbemanntes Luftfahrzeug mit Elektroantrieb, mit Hauptversorgungsakkus, Kontroll- und Überwachungssystemen, Sende- und Empfangssystemen, Flugkontrollsystem sowie Behälter mit Überwachungskopf mit einem nach unten zeigenden Objektiv in einer Nische im unteren Bereich des Rumpfs, wobei das unbemannte Luftfahrzeug in der letzten Flugphase, kurz vor der Landung, entlastet wird, **dadurch gekennzeichnet, dass** der Behälter (4) von der Nische (2) am unteren Bereich des Rumpfs (3) getrennt ist, wobei der Behälter (4) sich an der Außenwand des Rumpfs (3) bewegt und am Fallschirm (5) gezielt abgesenkt wird und das Luftfahrzeug woanders landet.

2. Verfahren nach Anspruch 1 **dadurch gekennzeichnet, dass** der Behälter (4) vom Rumpf (3) getrennt wird und der Fallschirm (5) neben dem Überwachungskopf (1) die Drehbewegung des fallenden Behälters (4) um seine Horizontalachse um 180° erzwingt, wodurch das Objektiv (9) des Überwachungskopfs (1) sich nach oben dreht.

3. Verfahren nach Ansprüchen 1 oder 2 **dadurch gekennzeichnet, dass**, wenn der Behälter (4) vom Rumpf (3) getrennt ist, der Elektromotor, der den Propeller (7) antreibt, ausgeschaltet wird und danach der Propeller sich entlang der Achse des unteren Bereichs des Rumpfs (3) bewegt und das entlastete Flugzeug zum Landen mittels des über Hilfsakkus versorgten Flugkontrollsystems nach unten geführt wird.

4. Unbemanntes Luftfahrzeug mit Elektromotorantrieb, mit einem Kontroll- und Überwachungssystem, Sende- und Empfangssystem, Akku und Behälter mit Überwachungskopf, dessen Objektiv nach unten an einer Nische im unteren Bereich des Rumpfs zeigt, **dadurch gekennzeichnet, dass** an der Nische (2) des Rumpfs (3) ein elektronisch gesteuertes Schloss (8) vorhanden ist, wobei das Schloss den trennbaren Behälter (4) mit mindestens einem Fallschirm (5) im unteren Bereich des Behälters (4) auf der Überwachungskopfseite (1) befestigt.

5. Unbemanntes Luftfahrzeug nach Anspruch 4, **dadurch gekennzeichnet, dass** das elektronisch gesteuerte Schloss (8) mit dem Schlossbolzen (6) am Behälter (4) zusammenwirkt.

6. Unbemanntes Luftfahrzeug nach Anspruch 4 oder 5, **dadurch gekennzeichnet, dass** der Behälter (4) die Hauptversorgungsakkus und die Systeme der Überwachungskopfsteuerung (1) enthält.

## Revendications

1. Une méthode d'atterrissage d'un véhicule aérien sans pilote entraîné par un moteur électrique, contenant les batteries de source d'alimentation principale, le système de contrôle de la tête de surveillance, les systèmes de transmission et de réception, un système de contrôle de vol et un container équipé d'une tête de surveillance avec une lentille orientée vers le bas, placé dans un évidement dans la partie inférieure du fuselage, où le véhicule aérien sans pilote est allégé à la dernière étape de vol peu de temps avant l'atterrissage, **caractérisé par le fait que** le container (4) est détaché de l'évidement (2) situé dans la partie inférieure du fuselage (3) et, ensuite le container (4) est déplacé à l'extérieur du fuselage (3) et descendu à l'aide d'un parachute (5) à l'emplacement requis et le véhicule aérien allégé atterrit dans un autre emplacement.

2. La méthode selon la revendication 1, **caractérisé par le fait que** quand le container (4) est détaché du fuselage (3), le parachute (5) fixé à proximité de la tête de surveillance (1) force la rotation de 180 degrés du le container (4) tombant autour de son axe horizontal, ce qui entraîne le positionnement de la lentille (9) de la tête de surveillance (1) vers le haut.

3. La méthode selon la revendication 1 ou 2, **caractérisé par le fait que**, quand le container (4) est détaché du fuselage (3), un moteur électrique qui entraîne l'hélice (7) est arrêté et, ensuite, l'hélice (7) se replie le long de l'axe de le fuselage (3), et l'aéronef allégé est ramené à l'atterrissage en mode planeur avec l'utilisation du système de contrôle de vol alimenté par des batteries auxiliaires.

4. Un véhicule aérien sans pilote entraîné par un moteur électrique, contenant un système de contrôle de la tête de surveillance, un système de transmission et de réception, une batterie et un container équipé d'une tête de surveillance avec une lentille orientée vers le bas, placé dans un évidement dans la partie inférieure du fuselage, **caractérisé par** le fait quedans l'évidement (2) du fuselage (3), un verrou contrôlé électroniquement (8) est monté, ledit verrou fixant de manière amovible un container (4) équipé d'au moins un parachute (5) placé dans la partie inférieure d'un container (4), du côté de la tête de surveillance (1).

5. Le véhicule aérien sans pilote selon la revendication 4, **caractérisé par** le fait quele verrou contrôlé électroniquement (8) collabore avec un mandrin de verrouillage (6) monté sur le container (4).

6. Le véhicule aérien sans pilote selon la revendication 4 ou 5, **caractérisé par le fait que** le container (4) comprend les batteries de la source d'alimentation principale et le système de contrôle de la tête de surveillance (1).
